# EUROPEAN PATENT SPECIFICATION

(11) **EP 2 666 362 B1**
(45) Date of publication and mention of the grant of the patent: **20.05.2015**
(21) Application number: 13168986.1
(22) Date of filing: 23.05.2013
(51) Int. Cl.: A23B 4/005, A23B 4/16, A23L 1/325

(54) **Process for packaging seafood raw material into a foodstuffs container and related package**
Verfahren zum Verpacken von Meeresfrüchtenrohmaterial in einen Lebensmittel-Behälter und zugehörige Verpackung
Procédé d'emballage de fruits de mer bruts dans un contenant alimentaire et emballage associé

(30) Priority: 24.05.2012 IT MI20120905
(43) Date of publication of application: 27.11.2013
(73) Proprietor: Bolton Alimentari S.P.A., 22072 Cermenate (Como) (IT)
(72) Inventor: Rosa, Alberto, 20833 Giussano (MB) (IT); Prina, Roberto, 22070 Bregnano (CO) (IT)
(74) Representative: Branca, Emanuela

(56) References cited:
- US-A- 4 946 326

## Description

The present invention relates to a process for packaging seafood raw material into a foodstuffs container and to a related package.

It is known to package foodstuffs comprising seafood raw material, such as for example tuna, salmon, shellfish or the like, in the form of fillets, steaks, comminuted pieces or the like, into suitable containers. Said containers, which are impermeable to gas, liquids and microorganisms, are generally heat sterilized after sealing, so as to make it possible to preserve them for a shelf life of several months or years after canning.

Containers comprising seafood raw material may also contain vegetables and/or cereals and/or flavouring essences and/or spices, herbs and/or a liquid which may be added for administering the flavouring essences, such as water, oil or sauces.

One of the main problems with the process for canning seafood raw material into a foodstuffs container and with the relevant package relates to preserving said products over time, and in particular to the oxidation to which the foodstuffs, in contact with the oxygen contained inside the container when sealed during sterilization and throughout the shelf life of the product, are subjected.

Some of the solutions to the problem of oxidation provide that the free volume of the container, i.e. the portion of the container which is not filled with the foodstuffs, is filled completely with a filling liquid, which in general consists of oil, water or sauces, and has the purpose of replacing the air which is present in the container and removing the oxygen.

In this case, a further relevant problem is that of the intact preservation of the seafood raw material, in particular if it consists of cakes of tuna or salmon preserved with a filling liquid consisting substantially of water. In fact, when the containers are handled, during sterilization or else during other production steps and during the shelf life of the product, the cakes of tuna or salmon undergo significant disintegration, for example.

Other known solutions for reducing the oxidation of foodstuffs, possibly used in combination with the use of a filling liquid, provide that as much air as possible is eliminated from the free volume, so as to reduce the presence of oxygen as much as possible. Elimination of the ambient air before sealing can be provided by creating a slight vacuum, for example by mechanical means.

Another method for reducing and eliminating the ambient air is to blow in water vapour, which leads to the creation of a slight vacuum upon condensing, or to preheat the contents when filling the container.

Alternatively, the ambient air can be eliminated before sealing by introducing gas to replace the ambient air itself, in particular introducing mixtures of nitrogen and carbon dioxide, in relative percentages depending on the foodstuffs.

The use of argon gas is known instead in the field of packaging fresh vegetables.

US 4 946 326 discloses a method for preserving fish or seafood comprising the steps of placing the product in a gas impermeable container, pulling a vacuum in said container, introducing in said container a gas mixture comprising, in partial pressure from about 50% to 68% carbon dioxide, 5% to 20% oxygen and 27% to 45% argon, and then sealing said container to seal sad product in said gas mixture at said partial pressures to avoid substantially any contamination from the external atmosphere surrounding said container and storing said container at refrigerated temperatures.

It has also been proposed, for example in document GB 2 089 191 A1, to eliminate the ambient air before sealing by introducing small amounts of liquid nitrogen, which upon expanding produces nitrogen gas directly inside the empty volume.

An object of the present invention is to provide a process for packaging seafood raw material into a foodstuffs container and a related package which makes it possible to overcome the aforementioned technical drawbacks, irrespective of the selection of the specific type of seafood raw material and irrespective of the selection of the added liquids and the amount thereof introduced during packaging.

Another object of the present invention is to provide a process for packaging seafood raw material into a foodstuffs container and a related package which achieves an optimum result in terms of preserving the organoleptic properties of the product throughout the shelf life.

A further object of the present invention is to provide a process for packaging seafood raw material into a foodstuffs container and a related package which, during the steps of the process and the shelf life, is not subject to bulging as a result of a storage temperature higher than the canning temperature, in particular if the container is flexible at least in part.

These objects according to the present invention are achieved by providing a process for packaging seafood raw material into a foodstuffs container and a related package as disclosed in the independent claims.

Further features are provided in the dependent claims.

The process according to the invention for canning seafood raw material into a foodstuffs container which can be hermetically closed involves filling a first potion of the container with at least seafood raw material.

According to a general form of the invention, the containers, which are impermeable to gases, liquids and microorganisms, may be rigid or partially flexible, such as for example a metal can having a rigid or flexible lid, a glass jar, or a rigid or semi-rigid receptacle or a flexible plastics material envelope which may be joined to a metal material.

Seafood raw material, which may be cooked or uncooked, means for example tuna, salmon, shellfish or the like, in the form of fillets, steaks, comminuted pieces or the like.

In the step of filling the container, vegetables and/or cereals and/or flavouring essences and/or spices, herbs and/or added liquids, such as water, oil or sauces, may be introduced in the container in addition to the seafood raw material, under the sole condition that the container is not filled completely, but a free volume is left in the container for receiving a gas mixture.

The "free volume" of the container means the portion of the container which is not filled with the foodstuffs.

The foodstuffs which may be introduced in the container in addition to the seafood raw material may equally well be added before, together with or after the seafood raw material.

The process according to the invention thus involves filling the free volume of the container with a gas mixture, in particular a mixture of argon and carbon dioxide.

Finally, the process according to the invention involves hermetically closing the container and heat sterilizing the sealed container.

According to the invention, the mixture of argon and carbon dioxide is formed with a percentage of argon equal to at least 30% by volume and a percentage of carbon dioxide equal to the complementary percentage for 100%.

The selection of the percentages of the gases in the mixture is linked, in particular, to the type of container used. For example, the lowest percentages of argon (substantially equal to 30%) will be used when using a flexible plastics material envelope. The use of a rigid metal container having a flexible lid will preferably result in a selection of a gas mixture made substantially of 50% argon and 50% carbon dioxide.

The use of a larger amount of carbon dioxide with more flexible containers is selected so as to exploit the greater tendency of carbon dioxide to solubilize in the packaged product, creating a vacuum so as to keep the flexible container adhering to the product itself.

Preferably, in accordance with the process according to the present invention as applied to a completely rigid metal container, the gas mixture is substantially made of 80% argon and 20% carbon dioxide.

Further, according to a preferred aspect of the present invention, in particular as applied to rigid or at least partially rigid metal containers, the gas mixture is introduced in the free volume of the container via a process providing vacuum compensated by injecting the gas mixture, which involves a step of applying a mechanical vacuum, in one or more stages, immediately before the step of injecting the gas mixture.

Still in accordance with a preferred embodiment of the process according to the invention, preferably in combination with the introduction of the gas mixture for compensating the mechanically generated vacuum, the step of sealing the container is performed in a chamber saturated with the same gas mixture introduced in the free volume.

These arrangements make it possible to replace the ambient air contained in the free volume of the container more effectively with the mixture of argon and carbon dioxide, and thus to reduce the percentage of residual oxygen to a minimum.

According to another embodiment of the process, in particular for packaging plastics material flexible envelopes, the mixture of argon and carbon dioxide could be injected directly into the container filled with foodstuffs, preferably close to the base.

During the heat sterilization step, and also to a lesser extent during the subsequent shelf life of the product, complicated chemical and physical reactions take place between the seafood raw material and the atmosphere contained in the free volume, made of the introduced mixture of argon and carbon dioxide and also of a residual amount of ambient air, substantially consisting of nitrogen and oxygen gases.

In fact, the heat sterilization process leads to oxidation of part of the seafood raw material in contact with the residual ambient air, resulting in browning of the seafood raw material, chemical reduction of the oxygen, which considerably reduces the percentage thereof, and production of carbon dioxide, which will be added to that which was introduced during canning.

Thus, during the production process, the seafood raw material and the composition of the atmosphere in the free volume is already being altered with respect to what was inserted in the container.

During the shelf life of the package, the chemicophysical reactions between the seafood raw material and the gaseous mixture present in the free volume unoccupied by foodstuffs continue, leading to further alterations and in particular also protracting the oxidation of the seafood raw material.

Further, the mixture of argon and carbon dioxide is absorbed in part by the seafood raw material in a gradual solubilization process over time, which starts even before the sterilization. This inhibits the growth of the majority of the bacteria which are present.

Further, the solubilization of the mixture of argon and carbon dioxide in the seafood raw material compensates the risk that in the long term, at the storage temperature - which is generally higher than the canning temperature - overpressures and possible bulgings of the packages may be brought about.

A related package of seafood raw material hermetically closed in a foodstuffs container and heat sterilized, according to the invention, comprises a first portion filled with at least seafood raw material and a free volume, i.e. not taken up by foodstuffs, comprising a gas mixture comprising at least argon and carbon dioxide, each of which is present in a percentage greater than 5% of the free volume.

The gas mixture contained in the free volume will also comprise nitrogen and possibly traces of oxygen, derived exclusively from the residual ambient air in the free volume and subsequent transformations thereof.

In particular, the carbon dioxide, which may reasonably be envisaged as being between 5% and 50% by volume, is made up of carbon dioxide introduced during packaging, carbon dioxide present in the residual air in the free volume, and carbon dioxide produced by the oxidation reactions, which are limited in extent but cannot be completely prevented; from this is subtracted the portion of carbon dioxide which solubilizes in the product in accordance with an equilibrium which develops constantly with temperature.

The nitrogen contained in the free volume, which may reasonably be envisaged as being between 10% and 50% by volume, is derived entirely from the residual ambient air in the free volume, and the variation in the percentage thereof depends, for example, on the efficiency of the elimination of ambient air and on the extent of the solubilization of the other gases in the mixture.

The possible traces of oxygen contained in the free volume, which may reasonably be envisaged as being less than 2% by volume, are derived exclusively from the ambient residual air in the free volume, reduced by way of the oxidation reactions. Therefore, the percentage thereof depends, for example, on the efficiency of the elimination of ambient air and on the extent of the solubilization of the other gases in the mixture.

As disclosed above, a seafood raw material package object of the present invention, hermetically closed in a foodstuffs container by the process involving introducing a mixture of argon and carbon dioxide in the free volume, must necessarily contain argon. Since argon is present in the ambient air in minimal amounts, if it is detectable in the package it can only have been introduced. In particular, the amount of argon introduced will be substantially maintained in the free volume of the sterilized package, apart from the portion which has solubilized in the foodstuffs.

For example, in the preferred process proposed for a rigid container, in which a gas mixture made of 80% argon and 20% carbon dioxide is introduced in the container after providing the mechanical vacuum in the container itself and closing the container in a chamber saturated with the same gas mixture, the sterilized contained will comprise, in the free volume, a gas mixture comprising argon, which may reasonably be at between 60% and 85%, and carbon dioxide, which may reasonably be at between 5% and 10%.

In addition to the seafood raw material, the container may also comprise vegetables and/or cereals and/or flavouring essences and/or spices, herbs and/or added liquids, such as water, oil or sauces or the like.

By virtue of the introduction of a gas mixture made of argon and carbon dioxide in the free volume, the process according to the invention has a number of technical advantages.

In fact, the carbon dioxide partially solubilizes in the product and, during the shelf life of the product, compensates bulgings - which are restrained - to which the container might be subjected. Further, by solubilizing in the product, the carbon dioxide slightly acidifies the product, preventing the growth of the majority of bacteria even before the entry to the autoclave for the heat sterilization.

This makes the requirements on the maximum acceptable dwell times of the products before entering the autoclave less restricting.

Further, the argon also leads to a reduction in the bacterial activity.

The simultaneous presence of argon and carbon dioxide has a synergistic action in terms of the bacteriostatic effect.

Therefore, if the same type of container is selected, with regard to the use of a mixture of nitrogen and carbon dioxide, according to the invention the proportion of argon and carbon dioxide requires a lesser use of carbon dioxide, to which potentially undesirable alterations in the organoleptic features of the product can be attributed.

Further, argon, unlike nitrogen gas for example, is soluble in water and oil and can therefore penetrate into the structure of the product, leading to more complete and rapid replacement of the oxygen in the product as well, and a resulting reduction in the oxidation reactions, including during the shelf life of the product.

The use of the mixture of argon and carbon dioxide makes it possible to improve the preservation of the organoleptic features of the seafood raw material during the shelf life of the product, and even significantly increases said shelf life. In particular, the alterations to the colour, flavour and consistency are reduced.

The effectiveness of argon can thus be seen both in the absence and in the presence of introduced liquids. In fact, even if the foodstuffs are covered by a layer of liquid in the sterilized package, it is still advantageous that the package comprises a free volume containing at least argon and carbon dioxide, for example if the packages are not stored in a flat position. This means that the process can be used in a very versatile manner with respect to the features of the foodstuffs introduced in the container.

Further, argon is approximately 1.43 times denser than nitrogen, and thus, being heavier, is more effective than nitrogen at replacing air, above all during handling of containers which are still open shortly before they are closed hermetically.

Further, for example if injected into the container at the base, it can move the column of air progressively upwards so as to replace the volume of air completely.

The process for canning seafood raw material into a foodstuffs container and a relevant package which are conceived in this manner are capable of many modifications and variants which are all within the scope of the invention; further, all of the details may be replaced with technically equivalent elements. In practice, the materials used and the dimensions may be as desired, in accordance with the technical requirements.

## Claims

1. Process for canning seafood raw material into a foodstuffs container which can be hermetically closed, comprising at least the steps of:
- filling a first portion of said container with at least seafood raw material,
- filling a free volume of said container, i.e. a portion of said container not filled with foodstuffs, with a gas mixture,
- hermetically closing said container and
- heat sterilizing said sealed container,
**characterized in that** said gas mixture introduced in the free volume is made of argon and carbon dioxide, wherein the percentage of argon is equal to at least 30% by volume and the percentage of carbon dioxide is equal to the complementary percentage for 100%.

2. Process according to claim 1, **characterized in that**, for the storage in a rigid container, said gas mixture is substantially made of 80% of argon and 20% of carbon dioxide.

3. Process according to claim 1, **characterized in that**, for the storage in a semi-rigid container, said gas mixture is substantially made of 50% of argon and 50% of carbon dioxide.

4. Process according to claim 1, **characterized in that**, for the storage in a flexible container, said gas mixture is substantially made of 30% of argon and 70% of carbon dioxide.

5. Process according to any of the preceding claims, **characterized in that** said step of filling the free volume of said container with a gas mixture is immediately preceded by a step of applying mechanical vacuum in one or more stages.

6. Process according to any of the preceding claims, **characterized in that** said step of sealing the container is performed in a chamber saturated with the same gas mixture introduced in the free volume.

7. Process according to any of the preceding claims, **characterized in that** said step of filling said first portion of said container provides for the introduction of other foodstuffs such as vegetables and/or cereals and/or flavouring essences and/or spices, herbs and/or added liquids, such as water, oil or sauces, in addition to the seafood raw material.

8. Package of seafood raw material hermetically closed in a foodstuffs container and heat sterilized, wherein said container comprises a first portion filled with at least seafood raw material and a free volume, i.e. not taken up by foodstuffs, said free volume comprising a gas mixture, **characterized in that** said gas mixture comprises at least argon and carbon dioxide, each of which is present in a percentage greater than 5% of the free volume.

9. Package according to claim 8, **characterized in that** said gas mixture comprises at least argon at about 60 - 85% and carbon dioxide at about 5 - 10% with respect to the free volume.

10. Package according to claim 8 or 9, **characterized in that** said portion of container filled with seafood raw material also comprises vegetables and/or cereals and/or flavouring essences and/or spices, herbs and/or added liquids, such as water, oil or sauces.

## Patentansprüche

1. Verfahren zum Konservieren von Meeresfrüchterohmaterial in einem Lebensmittelbehälter, welcher hermetisch verschlossen werden kann, umfassend zumindest die Schritte:
- Füllen eines ersten Abschnitts des Behälters mit zumindest Meeresfrüchterohmaterial,
- Füllen eines freien Volumens des Behälters, d.h. eines Abschnitts des Behälters, der nicht mit Lebensmitteln gefüllt ist, mit einer Gasmischung,
- hermetisches Verschließen des Behälters und
- Hitzesterilisieren des abgedichteten Behälters,
**dadurch gekennzeichnet, dass** die in das freie Volumen eingebrachte Gasmischung hergestellt ist aus Argon und Kohlenstoffdioxid, wobei der Anteil von Argon zumindest 30 Volumenprozent entspricht und der Anteil an Kohlenstoffdioxid dem Komplementäranteil von 100% entspricht.

2. Verfahren nach Anspruch 1, **dadurch gekennzeichnet, dass**, für das Aufbewahren in einem starren Behälter, die Gasmischung im Wesentlichen hergestellt ist aus 80% Argon und 20% Kohlenstoffdioxid.

3. Verfahren nach Anspruch 1, **dadurch gekennzeichnet, dass**, für die Aufbewahrung in einem halbstarren Behälter, die Gasmischung im Wesentlichen hergestellt ist aus 50% Argon und 50% Kohlenstoffdioxid.

4. Verfahren nach Anspruch 1, **dadurch gekennzeichnet, dass**, für die Aufbewahrung in einem flexiblen Behälter, die Gasmischung im Wesentlichen hergestellt ist aus 30% Argon und 70% Kohlenstoffdioxid.

5. Verfahren nach einem der vorhergehenden Ansprüche, **dadurch gekennzeichnet, dass** dem Schritt des Befüllens des freien Volumens des Behälters mit einer Gasmischung sofort vorausgeht ein Schritt des Anwendens eines mechanischen Vakuums in einer oder mehreren Stufen.

6. Verfahren nach einem der vorhergehenden Ansprüche, **dadurch gekennzeichnet, dass** der Schritt des Abdichtens des Behälters durchgeführt wird in einer Kammer, die mit der gleichen Gasmischung gesättigt ist, die in das freie Volumen eingebracht wird.

7. Verfahren nach einem der vorhergehenden Ansprüche, **dadurch gekennzeichnet, dass** der Schritt des Befüllens des ersten Abschnitts des Behälters vorsieht das Einbringen anderer Lebensmittel wie beispielsweise Gemüse und/oder Getreide und/oder Aromaessenzen und/oder Gewürzen, Kräuter und/oder Flüssigkeiten, wie beispielsweise Wasser, Öl oder Soßen, zusätzlich zu den Meeresfrüchterohmaterial.

8. Paket aus Meeresfrüchterohmaterial, das hermetisch in einem Lebensmittelbehälter verschlossen und hitzesterilisiert ist, wobei der Behälter einen ersten Abschnitt umfasst, der mit zumindest Meeresfrüchterohmaterial gefüllt ist und einem freien Volumen, d.h. nicht durch die Lebensmittel eingenommen, wobei das freie Volumen eine Gasmischung umfasst, **dadurch gekennzeichnet, dass** die Gasmischung zumindest Argon und Kohlenstoffdioxid umfasst, von denen jeweils beides vorhanden ist in einem Anteil von mehr als 5% des freien Volumens.

9. Paket nach Anspruch 8, **dadurch gekennzeichnet, dass** die Gasmischung zumindest Argon von ungefähr 60 bis 85% und Kohlenstoffdioxid von ungefähr 5 bis 10% in Bezug auf das freie Volumen umfasst.

10. Paket nach Anspruch 8 oder 9, **dadurch gekennzeichnet, dass** der Abschnitt des Behälters, der mit Meeresfrüchterohmaterial gefüllt ist, auch Gemüse und/oder Getreide und/oder Aromaessenenzen und/oder Gewürze, Kräuter und/oder zugefügte Flüssigkeiten, wie beispielsweise Wasser, Öl oder Soßen umfasst.

## Revendications

1. Procédé pour mettre en boîte une matière première de pêche dans un contenant de denrées alimentaires qui peut être fermé hermétiquement, comprenant au moins les étapes :
- de remplissage d'une première partie dudit contenant avec au moins une matière première de pêche,
- de remplissage d'un volume libre dudit contenant, c'est-à-dire d'une partie dudit contenant non remplie de denrées alimentaires, avec un mélange de gaz,
- de fermeture hermétique dudit contenant, et
- de stérilisation thermique dudit contenant fermé hermétiquement,
**caractérisé en ce que** ledit mélange de gaz introduit dans le volume libre est constitué d'argon et de dioxyde de carbone, dans lequel le pourcentage d'argon est égal à au moins 30 % en volume et le pourcentage de dioxyde de carbone est égal au pourcentage complémentaire pour 100 %.

2. Procédé selon la revendication 1, **caractérisé en ce que**, pour le stockage dans un contenant rigide, ledit mélange de gaz est sensiblement constitué de 80 % d'argon et de 20 % de dioxyde de carbone.

3. Procédé selon la revendication 1, **caractérisé en ce que** pour le stockage dans un contenant semi-rigide, ledit mélange de gaz est sensiblement constitué de 50 % d'argon et de 50 % de dioxyde de carbone.

4. Procédé selon la revendication 1, **caractérisé en ce que**, pour le stockage dans un contenant souple, ledit mélange de gaz est sensiblement constitué de 30 % d'argon et de 70 % de dioxyde de carbone.

5. Procédé selon l'une quelconque des revendications précédentes, **caractérisé en ce que** ladite étape de remplissage du volume libre dudit contenant avec un mélange de gaz est immédiatement précédée d'une étape d'application d'un vide mécanique en une ou plusieurs étapes.

6. Procédé selon l'une quelconque des revendications précédentes, **caractérisé en ce que** ladite étape de fermeture hermétique du contenant est effectuée dans une chambre saturée avec le même mélange de gaz que celui introduit dans le volume libre.

7. Procédé selon l'une quelconque des revendications précédentes, **caractérisé en ce que** ladite étape de remplissage de ladite première partie dudit contenant prévoit l'introduction d'autres denrées alimentaires telles que des légumes et/ou des céréales et/ou des essences aromatisantes et/ou des épices, des herbes et/ou des liquides ajoutés, tels que de l'eau, de l'huile ou des sauces, en plus de la matière première de pêche.

8. Emballage de matière première de pêche fermé hermétiquement dans un contenant de denrées alimentaires et stérilisé thermiquement, dans lequel ledit contenant comprend une première partie remplie d'au moins une matière première de pêche et un volume libre, c'est-à-dire non occupée par des denrées alimentaires, ledit volume libre comprenant un mélange de gaz, **caractérisé en ce que** ledit mélange de gaz comprend au moins de l'argon et du dioxyde de carbone, chacun étant présent en un pourcentage supérieur à 5 % du volume libre.

9. Emballage selon la revendication 8, **caractérisé en ce que** ledit mélange de gaz comprend au moins de l'argon à environ 60 % à 85 % et du dioxyde de carbone à environ 5 % à 10 % par rapport au volume libre.

10. Emballage selon la revendication 8 ou 9, **caractérisé en ce que** ladite partie de contenant remplie de matière première de pêche comprend également des légumes et/ou des céréales et/ou des essences aromatisantes et/ou des épices, des herbes et/ou des liquides ajoutés, tels que de l'eau, de l'huile ou des sauces.
